# EUROPEAN PATENT APPLICATION

(11) **EP 3 540 673 A1**
(43) Date of publication of application: **18.09.2019**
(21) Application number: 18161658.2
(22) Date of filing: 14.03.2018
(51) Int. Cl.: G06Q 20/34, G07F 17/00

(54) **IDENTITY BASED USE OF RIGHT TO SERVICE**

(71) Applicant: NoTie S.à r.l., 3895 Foetz (LU)
(72) Inventor: Suihkonen, Olli, 3895 Foetz (LU); Iija, Saara, 3895 Foetz (LU); Illukka, Risto, 3895 Foetz (LU); Karjalainen, Olli, 3895 Foetz (LU); von Schantz, Joachim, 3895 Foetz (LU)
(74) Representative: Kolster Oy Ab

(57) **Abstract**

There is provided a method for verifying a use of right to a service, the method comprising: prompting a first user to input a user identifier; determining whether or not the inputted user identifier meets one or more preconfigured conditions; requesting a verification from a second user that the user identifier uniquely identifies the first user; after obtaining the verification that the user identifier uniquely identifies the first user, transmitting a request message comprising the user identifier of the first user to a service system via a gateway, the request message requesting a verification that the user has right to the service; obtaining a response message to the request message, wherein the response message indicates whether or not the user identified by the user identifier has use of right to the service; and outputting a notification about the user's use of right to the service.

## Description

### TECHNICAL FIELD

The invention relates to verification of use of right to a service. More particularly, the present invention relates to using a multi-step process utilizing identity to verify the use of right.

### BACKGROUND

Using a service, such as a payment service, a billing service, Internet service, a gaming service, and the like may require a user to fulfil one or more conditions. I.e. to acquire use of right to such service, the user may need to be able to confirm that the user fulfils requirements set by the service provider. One example of such requirement is age. It may be beneficial to provide solutions which make this verification process more efficient from both the user and server provider side.

### BRIEF DESCRIPTION

According to an aspect, there is provided the subject matter of the independent claims. Some embodiments are defined in the dependent claims.

One or more examples of implementations are set forth in more detail in the accompanying drawings and the description below. Other features will be apparent from the description and drawings, and from the claims.

### BRIEF DESCRIPTION OF DRAWINGS

In the following embodiments will be described in greater detail with reference to the attached drawings, in which
Figure 1 illustrates a system according to an embodiment;
Figure 2 illustrates a flow diagram according to an embodiment;
Figures 3A, 3B, 3C, and 3D illustrate signal diagrams according to some embodiments; and
Figures 4, 5, 6, and 7 illustrate flow diagrams according to some embodiments.

### DETAILED DESCRIPTION OF SOME EMBODIMENTS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

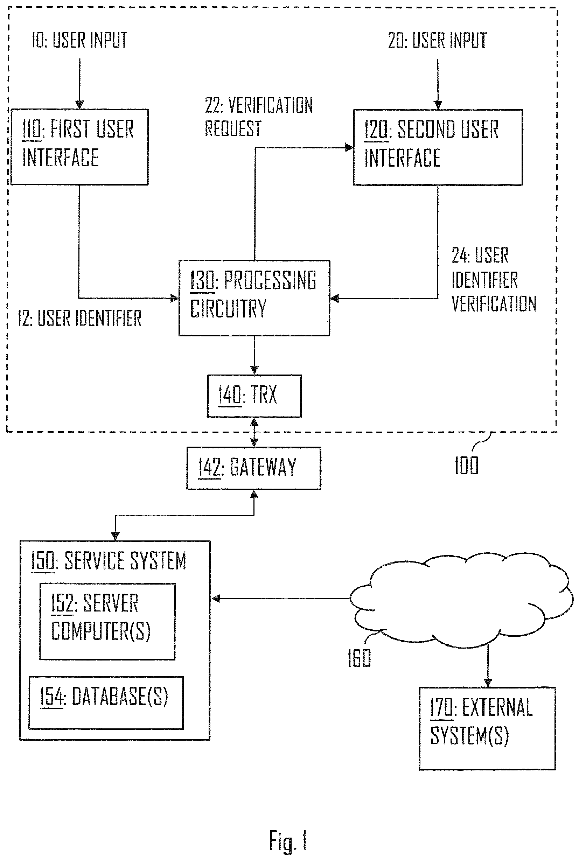

Figure 1 illustrates a system 100 for verifying a use of right to a service according to an embodiment. Referring to Figure 1, the system 100 comprises a first user interface 110; a second user interface 120; a communication circuitry (referred to as TRX) 130; and a processing circuitry 130. The system 100 may further be communicatively connected to a service system 150 via gateway 142.

According to an embodiment, the service system 150 is comprised in the system 100.

According to an embodiment, the gateway 142 is comprised in the system 100.

The service system 150 may comprise at least one server computer 152 and at least one database 154 for storing data, such as computer program code.

Furthermore, the service system 150 may be connected to one or more external services 170. The connection may be realized, for example, via cloud based network 160.

In general, the first user interface 110 may enable a first user to interact with the system 100. In general, the second user interface 120 may enable a second user to interact with the system 100. For example, the first user may be the user whose use of right may be verified. The second user may be a system operator (e.g. sales person, service responsible etc.) who may be responsible for verifying user identifier inputted by the first user. The first and/or second user interfaces 110, 120 may comprise standard user interface components, such as display, keyboard, speaker, and/or microphone, to enable two-way interaction with the system 100. For example, the user interface(s) 110, 120 may be terminals.

The processing circuitry 130 may comprise at least one processor, and at least one memory including a computer program code (software) wherein the at least one memory and the computer program code (software), are configured, with the at least one processor, to cause the system to carry out any one of the embodiments described above and below. On the other hand, the processing circuitry may be a specific circuitry (e.g. application-specific integrated circuit (ASIC)) configured to cause performing of said operations.

The TRX 140 may comprise hardware and/or software for realizing communication connectivity according to one or more communication protocols (e.g. Wireless Local Area Network (WLAN), WiFi, Near Field Communication (NFC), and/or Bluetooth). The TRX may provide the system 100 with communication capabilities to communicate with the service system 150 and/or with the external system(s) 170. The TRX may comprise standard well-known components such as an amplifier, filter, frequency-converter, (de)modulator, and encoder/decoder circuitries and one or more antennas.

The gateway 142 may refer to a networking gateway configured to enable communication between the system 100 and the service system 150.

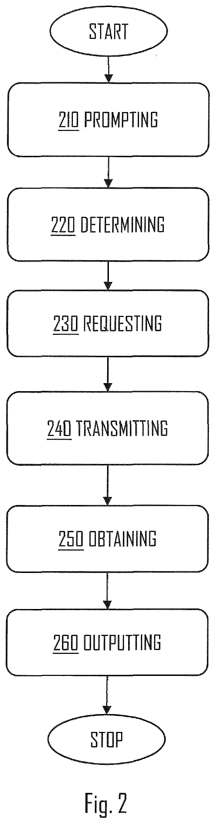

Referring to embodiments of Figures 1 and 2, there is provided a method for verifying a use of right to a service, the method comprising: prompting, by a first user interface 110, a first user to input 10 a user identifier 12 (block 210); determining, by a processing circuitry 130, whether or not the inputted user identifier 12 meets one or more preconfigured conditions (block 220); in response to determining that the user identifier 12 meets the one or more preconfigured conditions, requesting, via a second user interface 120, a verification 22 from a second user that the user identifier 12 uniquely identifies the first user (block 230); after obtaining (i.e. via user input 20), by the second user interface 120, the verification 24 that the user identifier 12 uniquely identifies the first user, transmitting, by a communication circuitry 140, a request message comprising the user identifier 12 of the first user to a service system 150 via a gateway 142, the request message requesting a verification that the user has right to the service (block 240); obtaining, by the processing circuitry 140, from the service system 150 a response message to the request message, wherein the response message indicates whether or not the user identified by the user identifier 12 has use of right to the service (block 250); and outputting a notification about the user's use of right to the service (block 260). For example, the outputting may be performed via the first user interface 110 and/or via the second user interface 120. Hence, the operator (e.g. the second user) may determine whether first user has use of right to the service. This may be beneficial, for example, in an access system in which the operator may ultimately decide whether the user may be permitted to use the service. It is possible to make this process automatic, such that the outputting the notification causes automatic predetermined action. For example, the predetermined action may comprise opening a door or printing a receipt about using the service.

In an embodiment, the outputting the notification comprises and/or causes an automatic action concerning the first user. For example, the first user may be automatically be granted access to a certain area (e.g. automatically open door) or automatically provide output that can be used to access a certain service and/or said certain area. For example, the automatically outputted notification may indicate whether or not the user has use of right to the service and/or indication about the use of the service. I.e. the system 100 may automatically cause using the service if the service system 150 confirms that the user has use of right to said service. Hence, at this moment, it also possible to indicate that the user has successfully used the service by providing his/her identifier to the system 100.

In an embodiment, block 240 is performed in response to obtaining the verification 24.

It is noted that the service system 150 may refer to the service that is being used and/or the service system 150 may be responsible about the verification of the use of right in which case the service may be provided by the system 100, for example, or the service may be some other external service. For example, the service may be a cinema or a movie to which the user's age needs to fulfil certain criterion (e.g. 12 or 18 years or older).

So, for example, based on the user identifier 12, the service system 150 may access one or more external system(s) 170 to determine acquire information on the user indicated by the user identifier. Said information may comprise, for example, age and/or credit information. Based on said information the service system 150 may determine whether the user meets one or more requirements (e.g. age exceeds a threshold and/or credit information indicates that credit risk does not exceed a limit or is below a limit). Said one or more requirements may be set, for example, by the second user via the second user interface 120. However, it is equally possible that the one or more requirements are predetermined on the basis of the used service. For example, user's credit information needs to be in order for the user to gain use of right to the service (e.g. no or less than a limit of delayed payments within certain time period (e.g. last year)).

According to an example embodiment, the described method is a computer-implemented method.

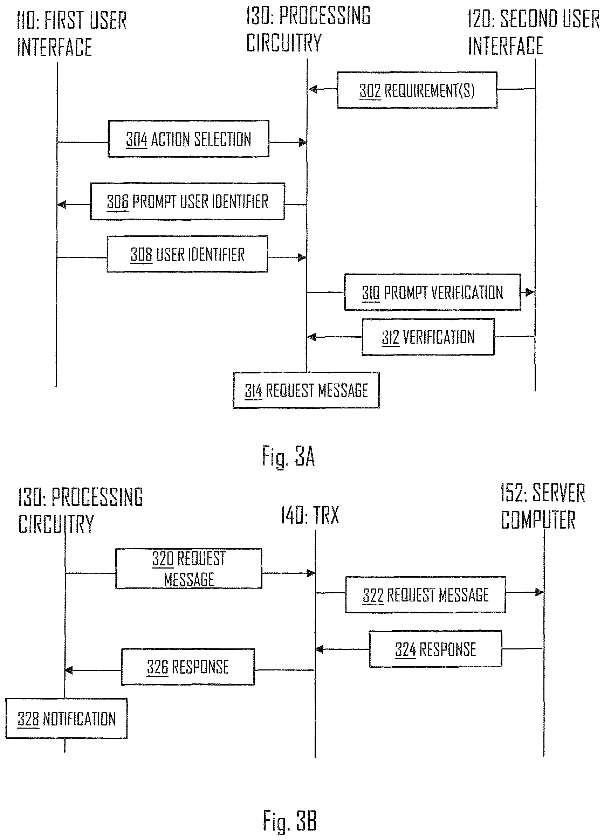

Let us look closer on some embodiments with the help of Figures 3A to 3D. It is noted that the different entities of the system 100 may be connected to each other wirelessly and/or via wire. Hence, the messaging between different entities may be possible. Referring to Figure 3A, in block 306 the processing circuitry 130 may prompt the first user (e.g. the customer) to input his/her user identifier. In block 308, the user identifier may be transmitted from the first user interface 110 to the processing circuitry 130 (block 308).

The processing circuitry 130 may automatically pre-process the user identifier in order to determine whether the user identifier inputted by the first user meets the one or more preconfigured conditions of block 220. Such conditions may be, for example, related to form and/or length of the input. For example, if the input needs to be 10 characters long, the preconfigured condition may so require. Hence, only valid and validly inputted user identifiers may be accepted by the processing circuitry 130 for further processing and verification. If invalid user identifier is inputted, the processing circuitry 130 may request another user input (block 306) and/or indicate the invalid input via the second user interface 120.

In block 310, the process may continue to the processing circuitry (PC) 130 prompting a verification from the second user interface 120 to the user identifier inputted via the first user interface 110. Hence, for example, the second user may verify that the user identifier to the first user belongs (i.e. uniquely identifies the first user). This may be indicated in response message of block 312. If the response is negative, the process may stop, and hence the user identifier may not be used to gain access to the service by some user utilizing false identity, for example. If the response is positive, meaning that the second user confirms that the first user is uniquely indicated by the user identifier, the process may continue to generating and transmitting the response message (block 314).

Figure 3B shows how the request message (i.e. discussed in block 240) is transmitted from the processing circuitry 130 to the server computer 152 of the service system 150 via the TRX 140 (blocks 320, 322). Blocks 320, 322 may be comprised in block 314, for example. The processing circuitry 130 may automatically generate the request message, comprising at least the user identifier if the positive verification is received in block 312, and transmit the message or cause transmission of the message to the server computer 152.

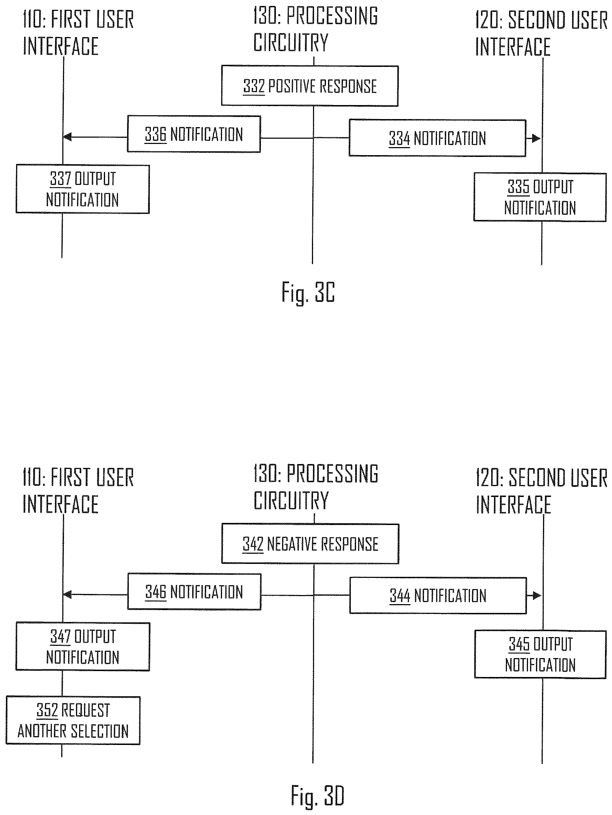

In blocks 324, 326 it is shown how the server computer 152 may respond to the request by transmitting the response message to the system 100. In block 328, based on the response (blocks 324, 326), the processing circuitry 130 may automatically cause output of the notification 328. The output of the notification may be affected by the response message, i.e. negative response may cause different output than positive response. These are discussed with respect to Figures 3C and 3D.

According to an embodiment, referring to Figure 3A, the processing circuitry 130 obtains (block 302) requirement(s) inputted, via the second user interface 120. The requirement(s) may indicate requirement that the first user needs to fulfil. The at least one requirement may be attainable via a plurality of different actions, said service being one of said different actions. In block 304, the processing circuitry 130 may obtain a user selection regarding the plurality of different actions; and in block 306, in response to the user selection indicating selection of said service, causing prompting the first user to input the user identifier in order to verify the user of right to the service by the first user. I.e. if the user selects said service, the use of right verification may commence. If the user selects some other action, the verification of the use of right may be different or omitted totally. One example of such may be a payment process. I.e. the requirement set via the second user interface 120 may be a requirement to pay for services. The first user interface 110 may in such case comprise a payment terminal comprising at least three different options: pay by debit, pay by credit and pay by using the service. In the first two options the use of right verification may be unnecessary. However, with the last option, the use of right may be verified. In this case it may be, for example, age and/or credit information related criterion that the user needs to fulfil in order to gain use of right to the service. For example, by using the service, the user may fulfil the requirement by providing his/her identity for invoicing service. A receipt may be outputted to the user if the use of right to the involving service is gained (e.g. block 337 of Figure 3C). However, if the user does not gain use of right to the service, a negative output (e.g. 347) may be outputted. In such case, the first user interface 110 may request another selection from the user (block 352), such as debit or credit card options, to fulfil the requirement set in block 302.

From a little more generic perspective, Figure 3C illustrates an example embodiment about positive response to the use of right query and Figure 3D illustrates an example embodiment about negative response to the use of right query.

So, in block 332, the processing circuitry 130 receives the positive response message from the system 150. The processing circuitry 130 may transmit (block 334, 336) the notification to one or both the first user interface 110, the second user interface 120. The user interface(s) may output (block 335, 337) said notification which indicates that the user has use of right to the service.

Similarly, in block 342, the processing circuitry 130 receives the negative response message from the system 150. The processing circuitry 130 may transmit the notification (block 344, 346) to one or both the first user interface 110, the second user interface 120. The user interface(s) may output (block 345, 347) said notification which indicates that the user has no use of right to the service. As noted above, the process may further continue to block 352 in which another selection is requested if such is/are available. I.e. in an embodiment, in response to determining that the response message (block 342) does not indicate that the user has use of right to the service, prompting, via the first user interface 110, a selection of one other action amongst the plurality of different actions for fulfilling the at least one requirement (e.g. set in block 302).

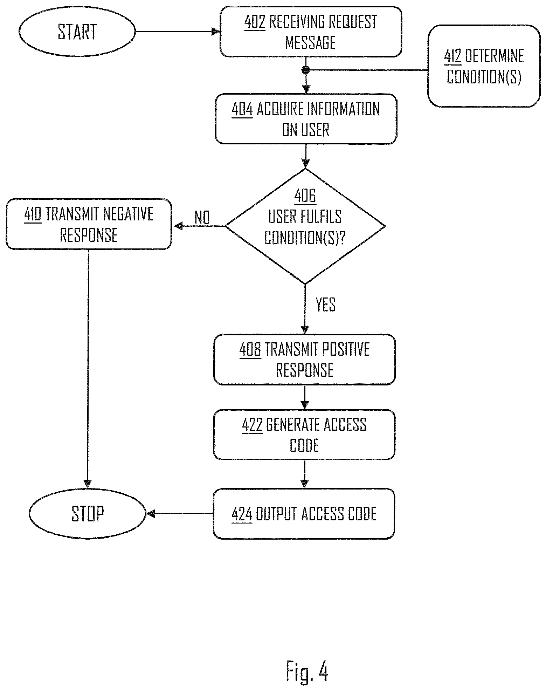

Figure 4 illustrates a flow diagram according to an example embodiment. The solution is further specified from the service system's 150 perspective. As noted, the steps by the service system 150 may be performed by the server computer(s) 152, for example.

Referring to Figure 4, the server computer 152 may receive the request message (block 402). The request message may be transmitted by the processing circuitry 130 (e.g. in block 240).

In block 404, the server computer 152 may access one or more external systems 170 comprising information on a plurality of users, and acquire, based on the user identifier, information on the first user from the one or more external systems 170. The information may comprise various different information. For example, the external system(s) 170 may comprise age information associated with user identifiers. Similarly, the information may comprise credit information associated with user identifiers. Hence, using a user identifier the server computer 152 may obtain information associated with said user identifier, such as age of the user and/or credit information on the user.

In block 406, based at least on said information acquired from the external system(s) 170 on the first user, determining whether the first user fulfills one or more conditions for using the service. If yes, process may continue to block 408. If no, the process may continue to block 410. So, the server computer 152 may transmit the response message indicating whether or not the user identified by the user identifier has use of right to the service (i.e. either positive response 408 or negative response 410).

The condition(s) of block 406 may relate to the acquired information on the user. Hence, according to an embodiment, in block 412, the server computer 152 determines the condition(s). For example, the request message may indicate the condition(s) or the conditions may be determined based on the request message. For example, the information on the user may be acquired after determining the conditions so that the correct or corresponding information may be retrieved from the external system(s) 170. In an embodiment, the request message indicates the at least one requirement that the first user needs to fulfil (e.g. set by the second user via the second user interface 120), and wherein the determining (block 406) whether the first user fulfills one or more conditions for using the service is further based on said at least one requirement. For example, the request message may indicate age criterion that needs to be fulfilled to gain use of right to the service. For example, the request message may indicate a credit criterion (e.g. no delayed payments within certain time period and/or liquidity status OK or exceeds a threshold) to gain use of right to the service.

According to an embodiment, the server computer 152 is configured to generate an access code associated with the user identifier of the first user for verifying the first user's use of right to the service (block 422); and output the access code (block 424). For example, the access code may be transmitted to the first user interface 110 and displayed to the first user. In another example, the access code is transferred to the user via some other means, such as email or postal service. Block 422 may be performed in response to determining that the first user fulfills the one or more conditions for using the service. In an embodiment, the access code is transmitted in the response message of block 408. The access code may be used, by the user, to verify his/her user identifier and/or his/her use of right to the service instead of having to use the service system 150 verification. Hence, if the user has at least once been verified to have use of right to the service, he/she may use the access code to verify his/her use of right on latter cases when he/she uses the service. So, for example, in another shop or another cinema the user may verify his/her age using the user identifier and the access code. For example, the access code may indicate certain characteristics of the user, such as age or credit information, which may be used to gain access to a service.

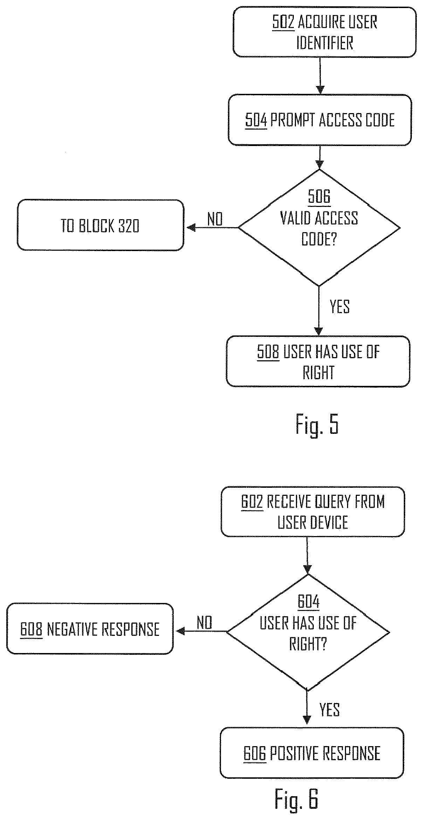

Figure 5 shows an embodiment in which the access code may be used. Referring to Figure 5, the processing circuitry 130 and/or the first user interface 110 may obtain the user identifier inputted by the user (block 502). In response to block 502, the processing circuitry 130 may cause the first user interface 110 to prompt the access code associated with the user identifier (block 504). In block 506, the processing circuitry 130 may determine whether the access code is valid. For example, this determination may be based on information received from the server computer 152 indicating access codes and associated user identifiers. I.e. the server computer may access the service system 150 to determine whether or not the access code and the user identifier are associated with each other. Such data may be stored, for example, in the database 154. In response to acquiring a valid access code, the processing circuitry 130 may cause outputting a notification indicating that the user has use of right to the service (block 508) (e.g. via first and/or second user interfaces 110, 120). If the access code is invalid or no access code is inputted within certain time, the process may continue to block 320 in which the request message comprising at least the user identifier may be transmitted to the service system 150. It is noted that although the access code may be used to bypass/substitute the service system verification if the verification is done at least once before, the verification via the second user interface 120 may still be needed (e.g. blocks 310, 312).

Figure 6 illustrates an embodiment. Referring to Figure 6, in block 602, the server computer 152 may receive a query from a user device, the query comprising a user identifier. This may refer to a different situation than the one discussed above. I.e. the user device may be a personal device, such as a mobile phone, of the user which he/she may use to transmit the query to the server computer 152. I.e. the personal device may be a portable device and hence usable also in premises where there is no first user interface 110. Also, the query may be transmitted without needing the verification via the second user interface 120. The server computer 152 may, based on the query, determine whether the user indicated by the user identifier has use of right to the service (block 604); and indicate, to the user device, whether or not the user has use of right to the service (block 606, 608). I.e. block 606 if yes; block 608, if no. So, by using the method described in Figure 6, the user may determine whether or not he/she has use of right to the service, for example, at home. Hence, he/she may save the trouble of going to the actual service only to determine that he/she does not have use of right to the service. This may also enhance overall performance of the system as there may thus be less need for transmitting requests (block 250) which return negative responses (block 250).

According to an embodiment, the user identifier comprises a social security number or a national identification number. I.e. the user identifier may be used to uniquely identify the person/user.

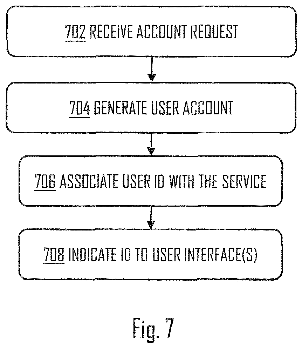

Figure 7 illustrates yet another embodiment. Referring to Figure 7, the server computer 152 may receive an account request regarding the second user (block 702). I.e. the service responsible, such as sales person, may request an account from the service system 150. Based on the request, in block 704, the server computer 152 may generate a user account for the second user, the user account including a unique identifier. Data about this may be stored, for example, in the database 154. In block 706, the server computer 152 may associate the unique identifier with the service. For example, the account request may be associated with a certain service (i.e. same service as discussed e.g. in Figure 2). In block 708, the server computer 152 may transmit the unique identifier associated with the service to the system 100, wherein the system may indicate the unique identifier to the first user interface 110 and/or to the second user interface 120, wherein the request message (e.g. block 240) further comprises the unique identifier of the second user to verify that the second user is associated with the service. So, this way the verification by the second user (e.g. blocks 310, 312) may further be enhanced, as now it may be determined that the user verifying the first user's identifier is registered with the service. So, basically the second user may use his/her user identifier, which is registered with the service, to verify that the identifier inputted by the first user belongs to the first user. So, the method may further require, for example, national identifier of the second user to verify that the first user's national identifier is correct before transmitting the request to the service system 150.

However, it is possible that the request is transmitted to the service system 150 such that the request comprises both user identifiers (i.e. first user and second user). Hence, gaining the use of right to the service, by the first user, may require that the second user is registered with the service. It is also possible to use some other identifier than the national identifier of the second user. For example, the identifier may be a service identifier that indicates that the first user interface 110 and/or the second user interface 120 are registered with the service. Hence, request initiated by the first user inputting his/her user identifier via the registered first user interface 110 may lead to gaining use of right to the service. Use of right may be declined if the first user interface 110 is not registered with the service (e.g. no user account for the second user).

According to an embodiment, the second user interface 120 requests, in block 230, verification by prompting the identifier associated with the second user. For example, this may be the user identifier of the second user or the service identifier. This way it may be ensured that only a user registered with the service may verify the first user's user identifier.

Let us then discuss in more detail about an example embodiment relating to payment service in which the solution described above may be used. In general, over the years merchants have offered 'Pay By Invoice' or 'Pay By Instalment' as a payment method in their stores, however the application submittance and handling has requires either separate device, online login, or a card. Using the described method may enhance and make this kind of process safes. For example, such payment service may be referred to as 'Pay By Identity' which is a safer method compared to those requiring a card and/or login. For example, inputting his/her user identifier, the user may start a real-time process which in few seconds provides a response of approved/declined (i.e. the service system 150 either grants or declines use of right to the pay-by-identity service). If approved, the payment terminal (i.e. the first user interface 110) may print a receipt with customer details, signature field and a short terms and conditions disclaimer. The customer data were fetched through the application process based on the user identifier from external services 170. According to one example the payment may only be allowed if the name in the receipt matches with the identifier provided by the customer, otherwise it may be cancelled. In another example, the request is not transmitted at all if the second user does not confirm/verify that the identifier matches with the user (or customer in this case).

As explained above, a service provider can order the payment service payment method into their payment terminals through an online service, or the order can be filled by someone else, after which the service provider may receive, e.g. an email with a link to authenticate and approve the order. The service system 150 (in this case may be referred to as a lending system) receives the order and creates a merchant account with unique ID.

The lending system may forwards the new merchant information automatically to the point of sale (POS) partner who may add the unique merchant ID to their system where the merchant is already setup as they are their existing customers for payment solution (e.g. gateway and device). The payment terminal may receive an updated set of parameters which may include the unique merchant ID. This process may enable the flow from the payment terminal through POS partner, for example.

The customer (i.e. first user) may choose the payment method in the payment terminal and authorizes the start of the transaction by entering their user identifier such as social security number (SSN). The payment terminal may send the request through the POS Partners payment gateway (e.g. gateway 142) to the lending system. In this phase, before transmitting the request, the customer SSN may be verified by the service provider as explained above.

An automatic process may fetch customer data from data service (e.g. external systems 170), based on the provided SSN, and the data to confirm the identity and status of the applicant. This is possible as the lending system may be communicatively connected with data service. An automated credit analysis may be performed based on the data fetched from the data service provider, as well as using possible existing customer data. The automated credit decision flow has predefined parameters and rules based on which the flow proceeds and on what the decision basis on. The results may be in displayed on the payment terminal (i.e. user interface 110). So, the customer is either granted access to the lending service or not. If not, the customer may select another payment method, such as credit or debit card or cash.

In an embodiment, the use of right to the service refers to use of right to the lending system. I.e. if the user has use of right to the lending system, he/she may pay the required fee (e.g. requested by the second user via second user interface 120) using the lending system service (i.e. pay-by-identity service).

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware.

In an embodiment, at least some of the processes described in connection with Figures 1 to 7 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 1 to 7 or operations thereof.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments of Figures 1 to 7, or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus (es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with Figures 1 to 7 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium, for example. Coding of software for carrying out the embodiments as shown and described is well within the scope of a person of ordinary skill in the art. In an embodiment, a computer-readable medium comprises said computer program.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method for verifying a use of right to a service, the method comprising:
prompting, by a first user interface, a first user to input a user identifier;
determining, by a processing circuitry, whether or not the inputted user identifier meets one or more preconfigured conditions;
in response to determining that the user identifier meets the one or more preconfigured conditions, requesting, via a second user interface, a verification from a second user that the user identifier uniquely identifies the first user;
after obtaining, by the second user interface, the verification that the user identifier uniquely identifies the first user, transmitting, by a communication circuitry, a request message comprising the user identifier of the first user to a service system via a gateway, the request message requesting a verification that the user has right to the service;
obtaining, by the processing circuitry, from the service system a response message to the request message, wherein the response message indicates whether or not the user identified by the user identifier has use of right to the service; and
outputting a notification about the user's use of right to the service.

2. The method of claim 1, further comprising:
obtaining, by the second user interface, a requirement input indicating at least one requirement that the first user needs to fulfil, the at least one requirement being attainable via a plurality of different actions, said service being one of said different actions;
obtaining, by the first user interface, a user selection regarding the plurality of different actions;
in response to the user selection indicating selection of said service, prompting, by the first user interface, the first user to input the user identifier in order to verify the user of right to the service by the first user.

3. The method of claim 2, further comprising:
in response to determining that the response message does not indicate that the user has use of right to the service, prompting, via the first user interface, a selection of one other action amongst the plurality of different actions for fulfilling the at least one requirement.

4. The method of any preceding claims, further comprising:
receiving, by a server computer of the service system, the request message;
accessing one or more external systems comprising information on a plurality of users;
acquiring, based on the user identifier, information on the first user from the one or more external systems;
based at least on said information on the first user, determining whether the first user fulfills one or more conditions for using the service; and
transmitting the response message indicating whether or not the user identified by the user identifier has use of right to the service.

5. The method of claim 4, wherein the request message indicates the at least one requirement that the first user needs to fulfil, and wherein the determining whether the first user fulfills one or more conditions for using the service is further based on said at least one requirement.

6. The method of any preceding claim, further comprising:
in response to determining, by the server computer of the service system, that the first user fulfills the one or more conditions for using the service, generating an access code associated with the user identifier of the first user for verifying the first user's use of right to the service; and
outputting the access code to the first user.

7. The method of claim 6, further comprising:
in response to acquiring the user identifier of the first user, prompting, by the first user interface, the access code associated with the user identifier;
in response to acquiring a valid access code, outputting a notification indicating that the user has use of right to the service.

8. The method of any preceding claim, further comprising:
receiving, by the server computer of the service system, a query from a user device, the query comprising a user identifier;
determining, based on the query, whether the user indicated by the user identifier has use of right to the service; and
indicating, to the user device, whether or not the user has use of right to the service.

9. The method of any preceding claim, wherein the user identifier comprises a social security number or a national identification number.

10. The method of any preceding claim, further comprising:
receiving, by the server computer of the service system, an account request regarding the second user;
generating, based on the request, user account for the second user, the user account including a unique identifier;
associating the unique identifier with the service;
indicating the unique identifier to the first user interface and/or to the second user interface, wherein the request message further comprises the unique identifier of the second user to verify that the second user is associated with the service.

11. A system for verifying a use of right to a service, the system comprising:
a first user interface;
a second user interface;
a communication circuitry; and
a processing circuitry, wherein the processing circuitry is configured to cause the system to perform steps of the method according to any of claims 1 to 10.

12. A computer program product comprising a computer program code readable by a computer, wherein the computer program code configures the computer to carry out the method according to any preceding claim 1 to 10 when read by the computer.

13. A computer-readable medium comprising the computer program product of claim 12.
